(19) **Europäisches Patentamt / European Patent Office / Office européen des brevets**

(11) **EP 2 046 045 A1**

(12) **EUROPEAN PATENT APPLICATION**

(43) Date of publication:
**08.04.2009 Bulletin 2009/15**

(51) Int Cl.:
*H04N 7/26* (2006.01)      *H04N 7/30* (2006.01)
*H04N 7/46* (2006.01)

(21) Application number: **07301423.5**

(22) Date of filing: **02.10.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Thomson Licensing**
**92100 Boulogne-Billancourt (FR)**

(72) Inventors:
• **Chen, Qu Qing**
  **100085 Beijing (CN)**
• **Chen, Zhi Bo**
  **100085 Beijing (CN)**

(74) Representative: **Le Dantec, Claude**
  **46, Quai Alphonse Le Gallo**
  **92100 Boulogne-Billancourt (FR)**

(54) **Methods of encoding and reconstructing image data and devices implementing said methods**

(57) The invention relates to a method for coding a block of N image data with N a positive integer comprising the step of :
- transforming (S2) the block of N image data into a block of N transformed data;
- quantizing (S4) the block of N transformed data into a block of N quantized data;
- sampling (S6) the block of N quantized data into M sampled data according to a predefined sampling pattern, with M<N; and
- coding (S8) the M sampled data into binary data.

FIGURE 2

**Description**

1. Field of the invention

The invention belongs to video/image coding domain. Specifically, the present invention relates to a coding method and a coding device. It also relates to a method for reconstructing image data and a decoder implementing the reconstructing method.

2. Background of the invention

In the prior art, it is known to encode video data using the steps of: predicting the video data, transforming the predicted data, quantizing the transformed data and entropy coding the quantized data. The transforming step may be based on a wavelet transform or on a DCT (stands for "Discrete Cosine Transform").

The above mentioned image/video coding method has the following limitation: if some of the data in the frequency domain are removed or modified by quantization, then the reconstructed data after inverse quantization and inverse transformation never contains exact information as which in the original video signals. Distortions are introduced thereby.

3. Summary of the invention

The invention relates to a method for coding a block of N image data with N a positive integer comprising the step of :

- transforming the block of N image data into a block of N transformed data;
- quantizing the block of N transformed data into a block of N quantized data;
- sampling the block of N quantized data into M sampled data with M an integer strictly less than N according to a predefined sampling pattern; and
- coding the M sampled data into binary data.

In particular, the invention improves the encoding of sparse image data. This is achieved by the sampling step.

According to a specific embodiment the sampling step and the quantizing step are interchanged.

Advantageously, the sampling step comprises the sub-steps of:

- scanning the N quantized data of the block according to a predefined order; and
- selecting the M first data of the scanned data as the M sampled data.

According to a specific characteristic, the predefined order is a zig-zag scan order.

The invention also relates to a method of reconstructing a block of N image data arising in the form of binary data comprising the steps of:

- decoding the binary data into M decoded data;
- dequantizing the M decoded data into M dequantized data;
- determining the block of N image data so that the sum of absolute values of the N image data is mimimum and so that the image data of the block after being processed according to the following steps are equal to the M dequantized data:

- transforming the block of N image data into a block of N transformed data; and
- sampling the block of N transformed data into M sampled data according to a predefined sampling pattern used for generating the binary data.

According to another embodiment, the method of reconstructing a block of N image data arising in the form of binary data comprising the steps of:

- decoding the binary data into M decoded data;
- dequantizing the M decoded data into M dequantized data;
- determining the block of N image data so that the sum of absolute values of the N image data is mimimum and so that the $l_2$ norm of the difference between the image data of said block after being processed according to the following steps and the M dequantized data is below a predefined threshold $\varepsilon$:

- transforming the block of N image data into a block of N transformed data; and
- sampling the block of N transformed data into M sampled data according to a predefined sampling pattern used for generating the binary data.

According to another embodiment, the method of reconstructing a block of N image data arising in the form of binary data comprising the steps of:

- decoding the binary data into M decoded data;
- dequantizing the M decoded data into M dequantized data;
- determining the block of N image data so that the $l_1$ norm of the gradient of the N image data is mimimum and so that the image data of the block after being processed according to the following steps are equal to the M dequantized data:

- transforming the block of N image data into a block of N transformed data; and
- sampling the block of N transformed data into M sampled data according to a predefined sampling pattern used for generating the binary data.

According to another embodiment, the method of reconstructing a block of N image data arising in the form of binary data comprising the steps of:

- decoding the binary data into M decoded data;
- dequantizing the M decoded data into M dequantized data;
- determining the block of N image data so that the $l_1$ norm of the gradient of the N image data is mimimum and so that the $l_2$ norm of the difference between the image data of said block after being processed according to the following steps and the M dequantized data is below a predefined threshold $\varepsilon$:

- transforming the block of N image data into a block of N transformed data; and
- sampling the block of N transformed data into M sampled data according to a predefined sampling pattern used for generating the binary data.

The invention further relates to an encoder comprising:

- means for receiving a block of N image data with N a positive integer;
- means for transforming the block of N image data into a block of N transformed data;
- means for quantizing the block of N transformed data into a block of N quantized data;
- means for sampling the block N quantized data into M sampled data with M an integer strictly less than N according to a predefined sampling pattern; and
- means for coding the M sampled data into binary data; and
- means for transmitting the binary data.

The invention further relates to a decoder comprising:

- means for receiving binary data representing a block of N image data;
- means for decoding the binary data into M decoded data;
- means for dequantizing the M decoded data into M dequantized data;
- means for determining the block of N image data so that the sum of absolute values of the N image data is minimized and so that the image data of the block after being processed according to the following steps are equal to the M dequantized data:

- transforming the block of N image data into a block of N transformed data; and
- sampling the block of N transformed data into M sampled data according to a predefined sampling pattern used for generating the binary data;

- means for transmitting the block of N image data.

The invention further relates to a binary stream representative of an image or a coded video sequence made of blocks of pixels, comprising, at least one binary data indicating for a block or a group of blocks whether the block or the blocks of the group is(are) encoded by the method according to the invention or by a predefined coding method different from the method according to the invention.

4. Brief description of the drawings

Other features and advantages of the invention will appear with the following description of some of its embodiments, this description being made in connection with the drawings in which:

-   Figure 1 represents an exemplary architecture of a video encoder capable of encoding data in a way compliant with the invention;
-   Figure 2 represents a flowchart of an encoding method according to a specific embodiment of the invention;
-   Figures 3 represents an exemplary architecture of a video decoder according to a specific embodiment of the invention;
-   Figure 4 represents a flowchart of a method of reconstructing image data according to a specific embodiment of the invention;
-   Figure 5 represents a flowchart of an encoding method according to another specific embodiment of the invention; and
-   Figure 6 represents a flowchart of a decoding method according to another specific embodiment of the invention.

5. Detailed description of preferred embodiments

In the past few years, a totally different signal recovery theory was discovered named compressed sensing theory, stating that a *sparsely* distributed signal can be almost completely recovered even if most of its linearly transformed coefficients are lost. This means that the reconstructed signals can almost be perfect even if some of the coefficients in the transformed domain are quantized to zero. Compared with the old signal recovery theory, the compressed sensing theory can bring a significant breakthrough in the application of image/video coding.

In the following paragraphs the general framework of compressed sensing theory is reviewed. The Shannon/Nyquist sampling theorem specifies that to avoid losing information when capturing a signal, one must sample at least two times faster than the signal bandwidth. However, the compressed sensing method, which is also named as compressive sampling, can capture and represent compressible signals at a rate significantly below the Nyquist rate. It employs non-adaptive linear projections that preserve the structure of the signal. The signal is then reconstructed from these projections using an optimization process.

For a real-valued, finite-length, one-dimensional, discrete-time signal $x$, it can be expressed as:

$$x = \sum_{i=1}^{N} s_i \psi_i \ \text{ or } \ x = \psi s \qquad (1)$$

Here $x$ and $s$ are $N \times 1$ column vectors, and $\psi = [\psi_1 | \psi_1 | \cdots | \psi_N]$ is a $N \times N$ basis matrix, with the vectors $\{\psi_i\}$ as columns and N as a positive integer. Clearly, $x$ and $s$ are equivalent representations of the signal, with $x$ in the time or space domain and $s$ in the $\psi$ domain. The signal $x$ is $K$-sparse, if it is a linear combination of only $K$ basis vectors, i.e. only $K$ of the $s_i$ coefficients in equation (1) are nonzero and $(N-K)$ are zero. The signal $x$ is compressible if the representation (1) has just a few large coefficients and many small coefficients; i.e. if $K << N$.

For traditional transform coding, $\psi$ is the transform, and $s$ is in the frequency domain. The $K$ largest coefficients are kept while the $(N-K)$ smallest coefficients are discarded.

In the compressed sensing theory, let us consider a general linear measurement process that computes $M < N$ inner products between $x$ and a collection of vectors $\left\{ \phi_j \right\}_{j=1}^{M}$ as in $y_j = <x, \phi_j>$, with M a positive integer. The measurements $y_j$ are arranged in an $M \times 1$ vector $y$ and the measurement vectors $\phi_j^T$ as rows in a $M \times N$ matrix $\Phi$. Then, by substituting $\psi$ from (1), $y$ can be written as:

$$y = \Phi x = \Phi \psi s = \Theta s \qquad (2)$$

Here $\Theta = \Phi \psi$ is a $M \times N$ matrix.
The signal reconstruction algorithm takes the $M$ measurements of the vector $y$, the random measurement matrix $\Phi$ (or

the random seed that generated), and the basis $\psi$ in order to reconstruct the length-$N$ signal x or, equivalently, its sparse vector *s*.

Since $M < N$, this problem appears to be ill-conditioned. However, the additional assumption of signal sparsity makes it possible and practical to reconstruct the signal *x*. According to the compressed sensing theory, when taking $M \geq c.K.\log N$ random measurements (c is a constant that affects the probability of recovery), the signal s which satisfies $\Theta s = y$ can be exactly recovered under the minimum $l_1$ norm reconstruction with high probability by solving the following constrained optimization problem:

$$\hat{s} = \arg\min \|s\|_1 \text{ such that } \Theta s = y \qquad (3)$$

For real valued signal *s*, the $l_1$ norm is the sum of absolute value of its non-zero coefficients, i.e. $\|s\|_{l_1} = \sum_{i=1}^{N} |s_i|$.

If some error is permitted, then the following constrained optimization problem has to be solved instead of those of equation (3):

$$\hat{s} = \arg\min \|s\|_1 \text{ such that } \|\Theta s - y\|_2 \leq \varepsilon \qquad (4)$$

If the signal is a 2D image of size nxn, then the sparsed signal s can also be the gradient. In this case, the following constrained optimization problem has to be solved instead of those of equation (3):

$$\hat{s} = \arg\min \|G\|_1 = \arg\min \sum_{i,j} \|D_{ij} s\|_2 \text{ such that } \Theta s = y \qquad (5)$$

where : - G is the gradient; and

$$- \quad D_{ij}s = \begin{pmatrix} D_{h,ij}s \\ D_{v,ij}s \end{pmatrix}, \quad D_{h,ij}s = \begin{cases} s_{i+1,j} - s_{i,j} & i < n \\ 0 & i = n \end{cases} \text{ and } D_{v,ij}s = \begin{cases} s_{i,j+1} - s_{i,j} & j < n \\ 0 & j = n \end{cases}$$

If the signal is a 2D image, if the sparsed signal s is the gradient and if some error is permitted, then the following constrained optimization problem has to be solved instead of those of equation (3):

$$\hat{s} = \arg\min \sum_{i,j} \|D_{ij} s\|_2 \text{ such that } \|\Theta s - y\|_2 \leq \varepsilon \qquad (6)$$

This is a convex optimization problem that can be conveniently reduced to a linear program known as basis pursuit. Such an algorithm is described in the document from E. Candes, J. Romberg, and T. Tao, entitled "Robust uncertainty principles: Exact signal reconstruction from highly incomplete frequency information," and published in IEEE Trans. on Information Theory, vol.52, no.2, Feb. 2006.

In all the embodiments described below the expression "block of pixels" means any type of block and therefore also means a macroblock.

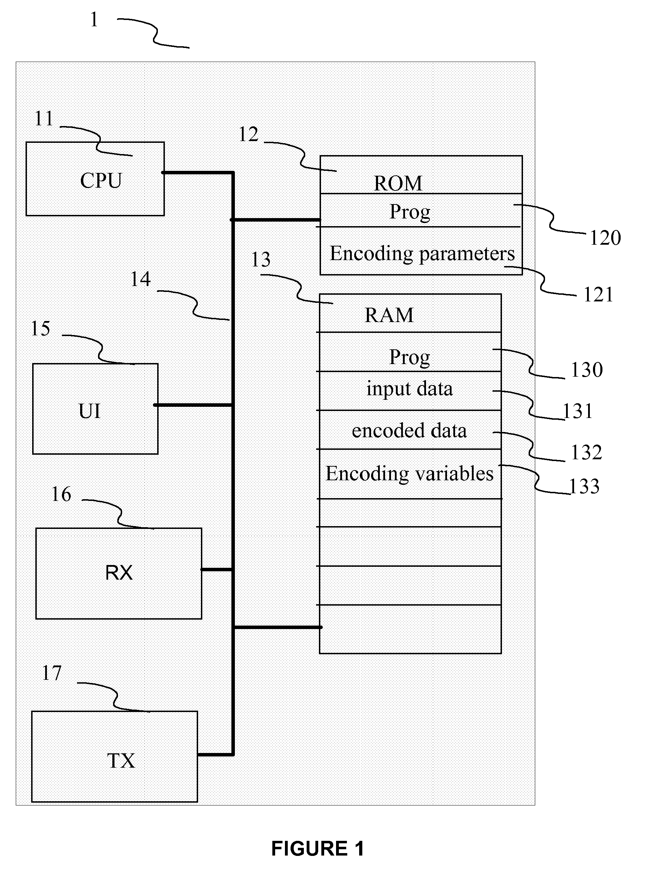

**Figure 1** represents an exemplary architecture of an encoder 1 according to the invention. Encoder 1 comprises the following elements that are linked together by a data and address bus 14:

- a microprocessor 11 (or CPU), which is, for example, a DSP (or Digital Signal Processor);
- a ROM (or Read Only Memory) 12;

- a RAM (or Random Access Memory) 13;
- a user interface 15;
- a module 16 for reception of video data to encode, the video data coming from an application or a hard disk;
- a transmission module 17 for transmission of encoded data on a channel for example to a decoder.

Each of these elements of figure 1 are well known by those skilled in the art and won't be disclosed further.

In each of mentioned memory, the word « register » used in the specification can correspond to area of small capacity (some bits) or to very large area (e.g. a whole program or large amount of received or decoded data).

ROM 12 comprises:

- a program "prog" 120; and
- encoding parameters 121 (such as quantization step, DCT transform, VLC tables etc); and

Algorithm of the encoding method according to the invention is stored in the ROM 12. When switched on, the CPU 11 uploads the program 120 in the RAM and executes the corresponding instructions.

RAM 13 comprises:

- in a register 130, the program executed by the CPU 11 and uploaded after switch on of the encoder 1;
- input data in a register 131;
- encoded data in different state of the encoding method in a register 132; and
- other variables used for encoding in a register 133.

According to a variant of the invention, the digital part of the encoder 1 is implemented in pure hardware configuration (e.g. in one or several FPGA, ASIC or VLSI with corresponding memory) or in a configuration using both VLSI and DSP.

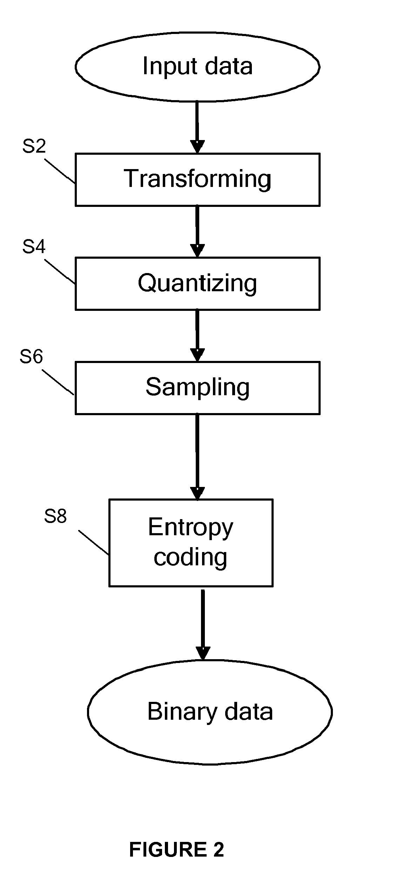

**Figure 2** discloses an encoding method according to a specific embodiment of the invention. In figure 2, the represented boxes are purely functional entities, which do not necessarily correspond to physical separated entities. Namely, they could be developed in the form of software, or be implemented in one or several integrated circuits. The method may be embodied in a computer readable medium and executable by a computer.

According to the invention, the data are assumed to be sparse in the spatial domain. A region in an image is said to be sparse if it has a few strong edges while the other part of the region is flat. Indeed, if $s$ is in the frequency domain and it is sparse, it can already be compressed efficiently by the traditional zig-zag scan and entropy coding method. The zig-zag scan process is well-known from the person skilled in the video compression domain and is not described further here (see for example section 7.3 of document ISO/IEC 13818-2:2000). However, if $s$ is sparse in the spatial domain, the transformed data spread in the whole frequency domain. It is therefore difficult to compress these data with a traditional method.

Therefore, according to the invention, $s$ is the $K$-sparse data in the spatial domain or the data after temporal or spatial prediction. $\psi$ is the normal DCT transform, and $\Phi$ is the additional sampling in the frequency domain. According to a preferred embodiment, the image is divided into non overlapping blocks of n by n pixels. The following steps apply successively to encode a given block of an image and are repeated in order to encode a whole image or a whole video sequence.

At step S2, the input data are transformed in transformed data (also called coefficients) using for example the DCT transform or the integer transform in the H.264/AVC. The input data can be the pixels' values (luminance, chrominance) of a block of image in the spatial domain, or the pixel values of the block after prediction. Such a prediction may occurs in the spatial domain and is named intra prediction or in the temporal domain and is called inter prediction.

At step S4, the transformed data are quantized into quantized data using same or similar quantization method as the existing quantization method of H.264/AVC, H.263, or MPEG-2 (see for example section 7.4 of document ISO/IEC 13818-2:2000).

At step S6, the quantized data are sampled according to a sampling pattern which may be predefined. The sampling step S6 can be a random or pseudo-random measurement. According to a variant, the first $M$ quantized data within the zig-zag scan are sampled (including the zero data and the non-zero data). According to the compressed sensing theory, when the random measurements number M is much larger than the sparsity K, more precisely when $M \geq c.K.\log N$, then the original data can be reconstructed perfectly by a minimum $l_1$ norm reconstruction method with a high probability.. However, the invention is not limited to the condition that $M \geq c.K.\log N$. Indeed, even when the condition is not fulfilled, the encoding method has better performance than a traditional DCT based encoding method. For example, for a macroblock, $N$=16x16=256, $M$ can be taken as 100. Then it can statistically reconstruct the sparse data with less than about 25 non-zero values. It should be noted that the sampling step can be put before the quantization, or after the quantization, although in this embodiment only the case sampling after quantization.

At step S8, the sampled data are then encoded in binary data using any of existing or future entropy coding methods to further remove the redundancy in the statistic domain. The encoding method of MPEG2 may be used (see for example section 7.2 of document ISO/IEC 13818-2:2000). The binary data may then be transmitted over a channel to a corresponding decoder implementing the decoding method according to the invention.

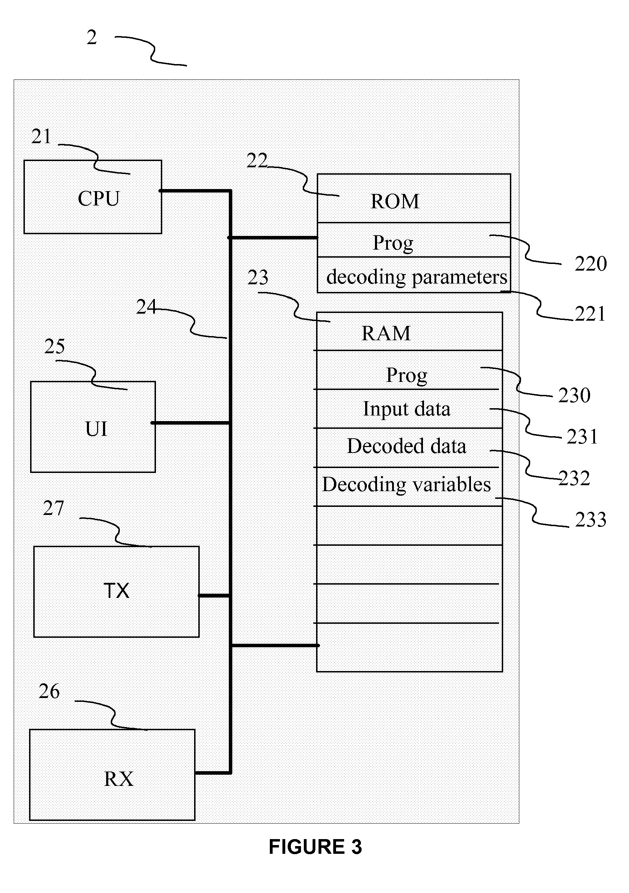

**Figure 3** represents an exemplary architecture of a decoder 2 according to the invention. The decoder 2 can be any decoder adapted to reconstruct data that are coded by the encoder 1. Advantageously, the decoder is adapted to take into account the specificities of the encoder 1 and especially the sampling step.

Decoder 2 comprises the following elements that are linked together by a data and address bus 24:

- a microprocessor 21 (or CPU), which is, for example, a DSP (or Digital Signal Processor);
- a ROM (or Read Only Memory) 22;
- a RAM (or Random Access Memory) 23;
- a user interface 25;
- a reception module 26 for reception of encoded data;
- possibly a module 26 for transmission of decoded data to an application and/or a display.

Each of these elements of figure 2 are well known by those skilled in the art and won't be disclosed further.

ROM 22 comprises:

- a program "prog" 220; and
- decoding parameters 221 (such as quantizing step, possibly VLC tables, etc).

Algorithm of the decoding method according to the invention is stored in the ROM 22. When switched on, the CPU 21 uploads the program 220 in the RAM and executes the corresponding instructions.

RAM 23 comprises:

- in a register 230, the program executed by the CPU 21 and uploaded after switch on of the decoder 2;
- input data in a register 231;
- decoded data in different state of the decoding method in a register 232; and
- other variables used for decoding in a register 233.

According to a variant of the invention, the digital part of the decoder 2 is implemented in pure hardware configuration (e.g. in one or several FPGA, ASIC or VLSI with corresponding memory) or in a configuration using both VLSI and DSP.

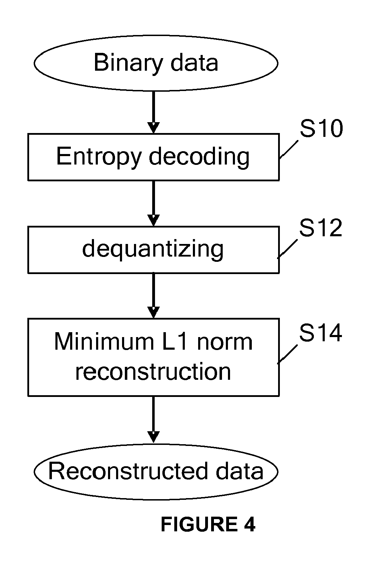

**Figure 4** discloses a method for reconstructing image data according to a specific embodiment of the invention. In figure 4, the represented boxes are purely functional entities, which do not necessarily correspond to physical separated entities. Namely, they could be developed in the form of software, or be implemented in one or several integrated circuits. The method may be embodied in a computer readable medium and executable by a computer. According to a preferred embodiment the following steps apply successively in order to reconstruct one block of n by n pixels in a given image. The steps are repeated in order to reconstruct a whole image or a whole video sequence.

At step S10, the input binary data are decoded in M decoded data using the inverse process of step S8. The decoded data are rearrange from a zig-zag scanned array to the appropriate position in the block to be reconstructed.

At step S12, the M decoded data are dequantized in M dequantized data. It applies the inverse process of step S4.

At step S14, N reconstructed data are obtained after the minimum $l_1$ norm reconstruction.

According to a first embodiment corresponding to equation (3), step 14 consists in determining N image data, with $N=n^2$, so that the sum of absolute values of said N image data is minimum and so that the N data after being processed according to the following steps are equal to the M dequantized data:

- transforming said N image data into N transformed data according to step S2 of the encoding method of figure 2; and
- sampling said block N quantized data into M sampled data according to step S6 of the encoding method of figure 2, with M an integer strictly less than N. Said otherwise the N image data are the image data $\{s_{i,j}\}_{0<i\leq n,0<j\leq n}$ that

minimize $\left\Vert s\right\Vert_1 = \sum\limits_{i,j=1}^{N}\left\vert s_{i,j}\right\vert$ subject to $\Theta s=y$, where $y$ represents the M dequantized data.

According to a second embodiment corresponding to equation (4), step 14 consists in determining N image data, with $N=n^2$, so that the sum of absolute values of said N image data is minimum and so that the $l_2$ norm of the difference between the N data after being processed according to the following steps and the M dequantized data is below a predefined threshold $\varepsilon$:

- transforming said N image data into N transformed data according to step S2 of the encoding method of figure 2; and
- sampling said block N quantized data into M sampled data according to step S6 of the encoding method of figure 2, with M an integer strictly less than N. Said otherwise the N image data are the image data $\{s_{i,j}\}_{0<i\leq n,0<j\leq n}$ that

minimize $\left\|s\right\|_1 = \sum_{i,j=1}^{N}\left|s_{i,j}\right|$ under the constraint that $\left\|\Theta s - y\right\|_2 \leq \varepsilon$.

According to a third embodiment corresponding to equation (5), step 14 consists in determining N image data $\{s_{i,j}\}_{0<i\leq n,0<j\leq n}$, with N=$n^2$, that minimize $\sum_{i,j}\left\|D_{ij}s\right\|_2$ and so that the N data after being processed according to the following steps are equal to the M dequantized data:

- transforming said N image data into N transformed data according to step S2 of the encoding method of figure 2; and
- sampling said block N quantized data into M sampled data according to step S6 of the encoding method of figure 2, with M an integer strictly less than N. Said otherwise the N image data are the image data $\{s_{i,j}\}_{0<i\leq n,0<j\leq n}$ that

minimize $\sum_{i,j}\left\|D_{ij}s\right\|_2$ under the constraint that $\Theta s = y$. According to a fourth embodiment corresponding to equation (6), step 14 consists in determining N image data $\{s_{i,j}\}_{0<i\leq n,0<j\leq n}$, with N=$n^2$, that minimize $\sum_{i,j}\left\|D_{ij}s\right\|_2$ and so that the $l_2$ norm of the difference between the N data after being processed according to the following steps and the M dequantized data is below a predefined threshold $\varepsilon$:

- transforming said N image data into N transformed data according to step S2 of the encoding method of figure 2; and
- sampling said block N quantized data into M sampled data according to step S6 of the encoding method of figure 2, with M an integer strictly less than N. Said otherwise the N image data are the image data $\{s_{i,j}\}_{0<i\leq n,0<j\leq n}$ that

minimize $\sum_{i,j}\left\|D_{ij}s\right\|_2$ under the constraint that $\left\|\Theta s - y\right\|_2 \leq \varepsilon$.

The minimum $l_1$ norm reconstruction can use the linear programming (LP) or the second-order cone programming (SOCP), according to different optimization models. The LPs are solved using a generic path-following primal-dual method, and the SOCPs are solved with a generic log-barrier algorithm. Such an algorithm is described in the document from E. Candes, J. Romberg, and T. Tao, entitled "Robust uncertainty principles: Exact signal reconstruction from highly incomplete frequency information," and published in IEEE Trans. on Information Theory, vol.52, no.2, Feb. 2006.

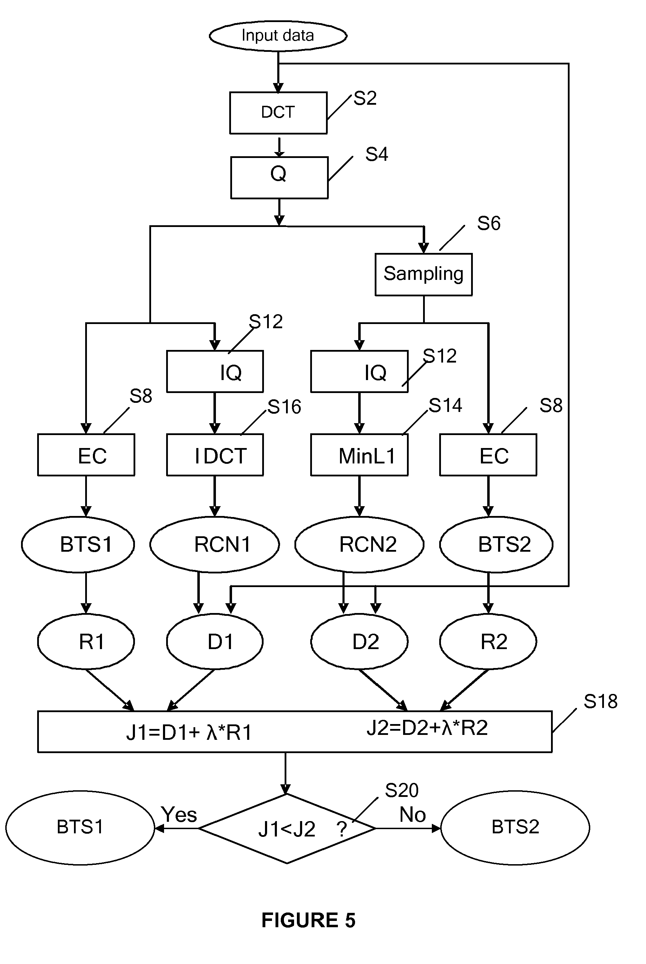

**Figure 5** discloses an encoding method according to another embodiment of the invention. In figure 5, the represented boxes are purely functional entities, which do not necessarily correspond to physical separated entities. Namely, they could be developed in the form of software, or be implemented in one or several integrated circuits. The method may be embodied in a computer readable medium and executable by a computer. The steps of the encoding method shown in figure 5 identical to those of the coding/decoding methods shown in figures 2 and 4 are identified using the same numerical references and are not further described. The encoding method described in reference with figure 2 is combined by RDO strategy with a traditional encoding method such as MPEG-2. RDO stands for "Rate Distorsion Optimization". To this aim, the encoding method of figure 5 further comprises an inverse transformation step S16 which consists in applying on the incoming data a transform which is the inverse of the transform applied at step S2. The RDO strategy consists, for each block of pixels to be encoded, in selecting as an encoding method the one that minimizes the following lagrangian function $J=D+\lambda\times R$ where D is the SSE distortion of the entire reconstructed block, $\lambda$ is a lagrangian parameter, and R is the allotted bits for coding the block. SSE stands for Sum of Square Errors. The lagrangian function is computed at step S18 for both methods. Then at step 20, a test is made which consists in comparing J1 with J2. If J1 is superior to J2 then the traditional encoding method is selected to encode the input data, otherwise the encoding method of figure 2 is selected to encode the input data. Other fast mode decision methods can also be employed to find the optimal encoding method.

Generally, some parts of the input image/video may contain sparse data while the other parts do not. When the input block of pixels comprises sparse data, the compressed sensing method works more efficiently. Otherwise the traditional transform coding method is selected. Advantageously, the encoding method of figure 5 combines the advantages of the traditional encoding method and of the compressed sensing theory based method.

The invention further relates to a binary stream representative of an image or a coded video sequence made of blocks of pixels comprising at least one binary data, also called flag indicating for a block or a group of blocks whether the block or the blocks of the group is(are) encoded by the method according to the invention based on the compressed sensing theory or by an encoding method different from the encoding method according to the invention.

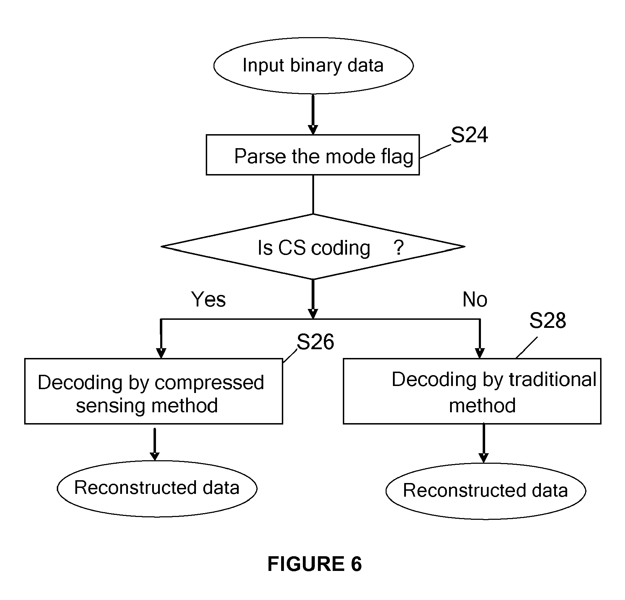

**Figure 6** discloses a decoding method according to another advantageous embodiment of the invention. In figure 6, the represented boxes are purely functional entities, which do not necessarily correspond to physical separated entities. Namely, they could be developed in the form of software, or be implemented in one or several integrated circuits. The method may be embodied in a computer readable medium and executable by a computer. The decoding method is adapted to decode a binary stream generated by the encoding method described with reference to figure 5. Here "CS" is the acronym of Compressed Sensing decoding method which uses a minimum $l_1$ norm reconstruction process (usually LP or SOCP method as mentioned before) to recover the original data. At step S24, the bitstream is parsed to determine the flag associated to a current block of pixels and indicating if this block is coded using a traditional encoding method or using the method of figure 2 based on the compressed sensing theory. If the flag indicates that the current block is encoded using the method based on the compressed sensing theory then step S26 applies to reconstruct the video data otherwise step S28 applies to reconstruct the video data.

**Claims**

1. Method for coding a block of N image data with N a positive integer comprising the step of :

   - transforming (S2) said block of N image data into a block of N transformed data;
   the said method being **characterized in that** it further comprises the steps of:
   - quantizing (S4) said block of N transformed data into a block of N quantized data;
   - sampling (S6) said block of N quantized data into M sampled data with M an integer strictly less than N according to a predefined sampling pattern; and
   - coding (S8) said M sampled data into binary data.

2. Method according to claim 1, wherein the sampling step (S6) and the quantizing step (S4) are interchanged.

3. Method according to claim 1, wherein the sampling step (S6) comprises the sub-steps of:

   - scanning the N quantized data of said block according to a predefined order; and
   - selecting the M first data of said scanned data as the M sampled data.

4. Method according to claim 3, wherein said predefined order is a zig-zag scan order.

5. Method of reconstructing a block of N image data arising in the form of binary data comprising the steps of:

   - decoding (S10) said binary data into M decoded data;
   - dequantizing (S12) said M decoded data into M dequantized data;
   the said method being **characterized in that** it further comprises a step of determining said block of N image data so that the sum of absolute values of said N image data is mimimum and so that the image data of said block after being processed according to the following steps are equal to said M dequantized data:
   - transforming said block of N image data into a block of N transformed data; and
   - sampling said block of N transformed data into M sampled data according to a predefined sampling pattern used for generating said binary data.

6. Method of reconstructing a block of N image data arising in the form of binary data comprising the steps of:

   - decoding (S10) said binary data into M decoded data;
   - dequantizing (S12) said M decoded data into M dequantized data;

the said method being **characterized in that** it further comprises a step of determining said block of N image data so that the sum of absolute values of said N image data is mimimum and so that the $l_2$ norm of the difference between the image data of said block after being processed according to the following steps and the M dequantized data is below a predefined threshold ε:
- transforming said block of N image data into a block of N transformed data; and
- sampling said block of N transformed data into M sampled data according to a predefined sampling pattern used for generating said binary data.

7. Method of reconstructing a block of N image data arising in the form of binary data comprising the steps of:

- decoding (S10) said binary data into M decoded data;
- dequantizing (S12) said M decoded data into M dequantized data;
the said method being **characterized in that** it further comprises a step of determining said block of N image data so that the $l_1$ norm of the gradient of said N image data is mimimum and so that the image data of said block after being processed according to the following steps are equal to said M dequantized data:
- transforming said block of N image data into a block of N transformed data; and
- sampling said block of N transformed data into M sampled data according to a predefined sampling pattern used for generating said binary data.

8. Method of reconstructing a block of N image data arising in the form of binary data comprising the steps of:

- decoding (S10) said binary data into M decoded data;
- dequantizing (S12) said M decoded data into M dequantized data;
the said method being **characterized in that** it further comprises a step of determining said block of N image data so that the $l_1$ norm of the gradient of said N image data is mimimum and so that the $l_2$ norm of the difference between the image data of said block after being processed according to the following steps and the M dequantized data is below a predefined threshold ε:
- transforming said block of N image data into a block of N transformed data; and
- sampling said block of N transformed data into M sampled data according to a predefined sampling pattern used for generating said binary data.

9. Encoder (1) comprising:

- means (16) for receiving a block of N image data with N a positive integer;
- means (11, 12, 13, 14) for transforming said block of N image data into a block of N transformed data;
the said encoder (1) being **characterized in that** it further comprises:
- means (11,12, 13, 14) for quantizing said block of N transformed data into a block of N quantized data;
- means (11,12, 13, 14) for sampling said block N quantized data into M sampled data with M an integer strictly less than N according to a predefined sampling pattern; and
- means (11,12, 13, 14) for coding said M sampled data into binary data; and
- means (17) for transmitting said binary data.

10. Decoder (2) comprising:

- means (26) for receiving binary data representing a block of N image data;
- means for decoding (21,22, 23, 24) said binary data into M decoded data;
- means for dequantizing (21, 22, 23, 24) said M decoded data into M dequantized data;
the said decoder (2) being **characterized in that** it further comprises:
- means for determining (21,22, 23, 24) said block of N image data so that the sum of absolute values of said N image data is minimized and so that the image data of said block after being processed according to the following steps are equal to said M dequantized data:
- transforming said block of N image data into a block of N transformed data; and
- sampling said block of N transformed data into M sampled data according to a predefined sampling pattern used for generating said binary data;
- means (27) for transmitting said block of N image data.

11. Binary stream representative of an image or a coded video sequence made of blocks of pixels, **characterized in that** it comprises, at least one binary data indicating for a block or a group of blocks whether said block or said blocks of said group is(are) encoded by the method according to claim 1 or by a predefined coding method different from said method according to claim 1.

**FIGURE 1**

**FIGURE 2**

**FIGURE 3**

**FIGURE 4**

**FIGURE 5**

Input binary data

Parse the mode flag —— S24

Is CS coding ?

Yes                 No

                                   S28

S26

Decoding by compressed sensing method        Decoding by traditional method

Reconstructed data           Reconstructed data

**FIGURE 6**

Europäisches
Patentamt

European
Patent Office

Office européen
des brevets

## EUROPEAN SEARCH REPORT

Application Number

EP 07 30 1423

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/038705 A1 (BRADY DAVID J [US] ET AL) 23 February 2006 (2006-02-23) * abstract; claims 7,8; figures 6,7 * * paragraphs [0005] - [0008], [0053] - [0056], [0068] - [0081], [0092], [0106] - [0112], [0128], [0174], [0181], [0200] * | 1,5,9,10 | INV. H04N7/26 H04N7/30 H04N7/46 |
| D,X | CANDÈS E J ET AL: "Robust uncertainty principles: exact signal reconstruction from highly incomplete frequency information" INTERNET CITATION, vol. 52, no. 2, February 2006 (2006-02), pages 489-509, XP002491493 [retrieved on 2006-02-01] * abstract * * paragraph [0001] * | 1,5,7,9, 10 | |
| X | WO 2006/122146 A (UNIV RICE WILLIAM M [US]; BARANIUK RICHARD G [US]; BARON DROR Z [US];) 16 November 2006 (2006-11-16) * abstract * * paragraphs [0060] - [0064], [0092], [0092], [0231] * | 1,5,9,10 | TECHNICAL FIELDS SEARCHED (IPC) H04N |
| X | EMMANUEL CANDÈS, JUSTIN ROMBERG, AND TERENCE TAO: "Stable signal recovery from incomplete and inaccurate measurements" COOMUNICATIONS ON PURE AND APPLIED MATHEMATICS, August 2006 (2006-08), XP002499280 Retrieved from the Internet: URL:http://users.ece.gatech.edu/~justin/Pu blications_files/StableRecovery.pdf> * abstract * * paragraphs [01.1], [01.2], [0003] * | 1-11 | |

-/--

The present search report has been drawn up for all claims

| Place of search | Date of completion of the search | Examiner |
|---|---|---|
| Munich | 10 October 2008 | Cakiroglu Garton, S |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

Europäisches
Patentamt

European
Patent Office

Office européen
des brevets

# EUROPEAN SEARCH REPORT

Application Number

EP 07 30 1423

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GALEN REEVES ET AL: "Differences Between Observation and Sampling Error in Sparse Signal Reconstruction" STATISTICAL SIGNAL PROCESSING, 2007. SSP '07. IEEE/SP 14TH WORKSH OP ON, IEEE, PI, 1 August 2007 (2007-08-01), pages 690-694, XP031134158 ISBN: 978-1-4244-1197-9 * abstract * * paragraphs [0001], [0003], [0004] * | 1,5,6,9, 10 | |
| X | MALEH R ET AL: "Sparse Gradient Image Reconstruction Done Faster" IMAGE PROCESSING, 2007. ICIP 2007. IEEE INTERNATIONAL CONFERENCE ON, IEEE, PI, 1 September 2007 (2007-09-01), pages II-77, XP031157865 ISBN: 978-1-4244-1436-9 * abstract * * paragraphs [0001], [0003] - [0005] * | 1,5,7,9, 10 | |
| A | PETROS BOUFOUNOS AND RICHARD BARANIUK: "Quantization of sparse representations" DATA COMPRESSION CONFERENCE, March 2007 (2007-03), XP002499281 Utah Retrieved from the Internet: URL:http://scholarship.rice.edu/bitstream/handle/1911/13034/Quantization_TR_0701.pdf?sequence=1> * the whole document * | 1-11 | TECHNICAL FIELDS SEARCHED (IPC) |

The present search report has been drawn up for all claims

| Place of search | Date of completion of the search | Examiner |
|---|---|---|
| Munich | 10 October 2008 | Cakiroglu Garton, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT**
**ON EUROPEAN PATENT APPLICATION NO.**                    EP 07 30 1423

This annex lists the patent family members relating to the patent documents cited in the above-mentioned European search report.
The members are as contained in the European Patent Office EDP file on
The European Patent Office is in no way liable for these particulars which are merely given for the purpose of information.

10-10-2008

| Patent document cited in search report | | Publication date | Patent family member(s) | | Publication date |
|---|---|---|---|---|---|
| US 2006038705 | A1 | 23-02-2006 | US | 2008080773 A1 | 03-04-2008 |
| | | | US | 2008074663 A1 | 27-03-2008 |
| | | | US | 2008129568 A1 | 05-06-2008 |
| | | | US | 2008074291 A1 | 27-03-2008 |
| | | | US | 2008074292 A1 | 27-03-2008 |
| WO 2006122146 | A | 16-11-2006 | US | 2007027656 A1 | 01-02-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **E. CANDES ; J. ROMBERG ; T. TAO.** Robust uncertainty principles: Exact signal reconstruction from highly incomplete frequency information. *IEEE Trans. on Information Theory,* February 2006, vol. 52 (2